# EUROPÄISCHE PATENTSCHRIFT

(11) **EP 0 433 778 B1**
(45) Veröffentlichungstag und Bekanntmachung des Hinweises auf die Patenterteilung: **27.04.1994**
(21) Anmeldenummer: 90123369.2
(22) Anmeldetag: 06.12.1990
(51) Int. Cl.: C09D 5/46, B05D 1/08, C23C 4/04

(54) **Verfahren zur Herstellung thermisch gespritzter Schichten aus gegebenenfalls gefüllten Polyarylensulfiden**
Method for manufacturing thermally sprayed layers of filled or unfilled polyarylene sulfides
Méthode d'application de couches de polyarylene sulfide chargées ou non par pistolage à la flamme

(30) Priorität: 19.12.1989 DE 3941862
(43) Veröffentlichungstag der Anmeldung: 26.06.1991
(73) Patentinhaber: BAYER AG, 51368 Leverkusen (DE); H.C. Starck GmbH & Co. KG, 38642 Goslar (DE)
(72) Erfinder: Zander, Klaus, Dr., W-4300 Essen 11 (DE); Freitag, Dieter, Dr., W-4150 Krefeld-Traar (DE); Idel, Karsten-Josef, Dr., W-4150 Krefeld (DE); Fengler, Gerd, Dr., W-4150 Krefeld-Traar (DE); Krismer, Bruno, W-3380 Goslar (DE); Scholand, Heinz, W-3342 Hornburg (DE); Beczkowiak, Joachim, W-7887 Laufenburg (DE)

(56) Entgegenhaltungen:
- EP-A- 0 339 742
- US-A- 3 962 486

## Beschreibung

Die Erfindung betrifft ein Verfahren zur Herstellung thermisch gespritzter Schichten aus gegebenenfalls gefüllten Polyarylensulfiden, die bei Temperaturen oberhalb 200°C stabil bleiben.

Vielfach werden Kunststoffe mit Füllstoffen versetzt, was dazu führt, daß die physikalischen und chemischen Eigenschaften dieser Kunststoffe verbessert bzw. speziellen Problemstellungen angepaßt werden.

Aus hochtemperaturbeständigen Kunststoffen lassen sich durch Sintertechniken Schichten auf Unterlagen herstellen. Viele dieser Überzüge zeigen jedoch Inhomogenitäten bedingt durch lokale Hitzeschwankungen, insbesondere beim Aufbringen großflächiger Überzüge. Neben dieser Sintertechnik können Überzüge von hochtemperaturstabilen Kunststoffen durch thermische Spritztechniken hergestellt werden.

Thermisches Spritzen von Materialien zur Vergütung von Oberflächen von Substraten ist ein häufig angewandtes Verfahren. Man erreicht damit Deckschichten, die durch andere Verfahren kaum herzustellen sind.

Die Beschichtung von Oberflächen mit Polymeren mittels thermischer Spritzmethoden ist schwierig. Übliche Verfahren wie Beschichtung von Metallteilen im Wirbelbett sind nur möglich, wenn man das Substrat erwärmen kann. Das ist z.B. bei großen Teilen wie Reaktionskesseln für die chemische Indsutrie schwer möglich. Bei vielen Substratwerkstoffen, wie z.B. Formteilen aus niedrigschmelzenden Polymeren ist dies kaum möglich. Thermisches Spritzen ermöglicht jedoch auch die Beschichtung mit hochschmelzenden Werkstoffen, ohne das Substratmaterial wesentlich zu erwärmen, wie es z.B. im Flugzeugbau bei der Beschichtung von Kunststoffteilen mit Al₂O₃ üblich ist.

Die Beschichtung von Substraten mit Kunststoffen durch thermisches Spritzen beschränkte sich bisher auf die Verarbeitung niedrigschmelzender Thermoplaste oder auf Spezialfälle, wie es z.B. Anstreifbeläge im Flugtriebwerkbau darstellen, wo hochschmelzende Polymere mit metallischem Spritzpulver gemischt so thermisch gespritzt werden, daß ein Metallgerüst um die verwendeten Polymerteilchen entsteht (z.B. US-A 3 723 165).

Die häufigste bisherige Anwendung von Polymeren beim thermischen Spritzen ist die Verwendung als verbrennbarer Kleber bei der Herstellung von agglomerierten oder mit einem zweiten Werkstoff beklebten Spritzpulvern (z.B. DE-A 1 796 370, US-A 4 181 525) oder bei elastischen Spritzdrähten, bei denen die Legierungsbestandteile durch einen Kunststoff zusammengehalten und radial um einen Drahtkern angeordnet sind. Das Polymere ist in den zuletzt aufgeführten Anwendungen nur Hilfsmittel.

Aus den EP-A 339 742, US-A 3 962 486 sowie Encyclopedia of Polymer Science and Engeneering Vol. 11, s. 550 ff., ist bekannt, hochtemperaturbeständige Thermoplaste, u.a. auch durch Flammspritzen, zu Überzügen zu verarbeiten. Flammspritzen von PAS ist jedoch noch nicht beschrieben worden.

Die Erfindung zeigt einen neuen Wert auf, der es ermöglicht, hochtemperaturbeständige Kunststoffmassen zu Schichten durch thermische Spritztechniken zu verarbeiten, wobei im Gegensatz zum bisherigen Stand der Technik die hochtemperaturbeständigen Kunststoffmassen weder als verbrennbarer Kleber noch Hilfsmittel verwendet werden, sondern die Schichten selbst darstellen, wodurch die polymerspezifischen Eigenschaften zur Geltung kommen. Durch Funktionswerkstoffe lassen sich die Eigenschaften der Kunststoffmassen verändern, so daß die Schichten dem Substratmaterial soweit angenähert werden können, daß gut haftende, langlebige Beschichtungen möglich sind und zusätzlich die chemischen, thermischen und elektrischen Eigenschaften der Schichten dem Anwendungsfall angepaßt werden können.

Die Erfindung betrifft die Herstellung von thermisch gespritzten Schichten aus hochtemperaturbeständigen Kunststoffmassen, die für eine Verarbeitung durch thermisches Spritzen bisher nicht beschrieben sind und nicht die Nachteile der mangelnden Härte und Festigkeiten aufweisen, die üblicherweise Schichten aus reinen Kunststoffmassen besitzen.

Gegenstand der Erfindung ist ein Verfahren zur Herstellung thermisch gespritzter Schichten aus Polyarylensulfiden die oberhalb 270° C unzersetzt schmelzen und gegebenenfalls
0,1 - 90 Gew.-%, vorzugsweise 0,1 - 70 Gew.-%, insbesondere
0,1 - 60 Gew.-% übliche Füll- und Verstärkungsstoffe.

Die Füll- und Verstärkungsstoffe (Funktionswerkstoffe) haben Korngrößen von 0,1 -600 µm, vorzugsweise 1 - 100 µm.

Die eingesetzten Polyarylensulfide werden vorzugsweise als Granulat mit einer Korngröße von 1-300 µm, bevorzugt 5,6-106 µm Durchmesser eingesetzt.

Die thermisch gespritzten Schichten können durch alle bekannten Verfahren z.B. des Flammspritzens, durch Plas maverfahren usw. hergestellt werden.

Als übliche Füll- und Verstärkungsstoffe können Funktionswerkstoffe wie Metalle, Legierungen, Boride, Karbide, Nitride, Silizide, Oxide, Sulfide, Selenide, Telluride und Halogenide bzw. deren Mischungen eingesetzt werden.

Die verwendeten Polyarylensulfide die oberhalb 270°C unzersetzt schmelzen sind z.B. Polyphenylensulfide (z.B. US-A 3 354 129, EP-A 166 368, EP-A 171 021).

Ein Vorteil der verwendeten Kunststoffmassen besteht darin, daß diese Kunststoffmassen beim thermischen Spritzen durch ihre besonderen thermoplastischen und physikalischen Eigenschaften durchaus vollständig aufschmelzen können, ohne daß im Gegensatz zu den üblicherweise verwendeten Kunststoffen Zersetzung eintritt.

### Beispiele

### Beispiel 1

Ein PPS-Pulver mit einer Korngrößenverteilung von 38 - 150 µm wurde mit einer UTP-Unijet-Flammspritzanlage und einer Acetylen-Sauerstofflamme verspritzt. Der Acetylendruck betrug 0,6 bar, der Sauerstoffdruck 2,5 bar. Zur Pulverförderung wurde eine Plasma-Technik-TWIN 10-Anlage verwendet. Die Fördermenge betrug 19 g/min., der Spritzabstand 200 mm. Gespritzt wurde auf ein Blech der Werkstoffnummer 1.8902 (ST 43), mit einer Schichtdicke von 800 µm. Die Beschichtung war dicht. Korrosionstests in halbkonzentrierter heißer Salzsäure ergaben eine ausgezeichnete Beständigkeit der Beschichtung.

### Beispiel 2

In das PPS-Grundmaterial wurden 20 % CaF₂1 und 15 % Zinkoxid eingeknetet und das homogene Gemisch zu Granulaten verarbeitet. Aus dem Granulat wurde ein Pulver der Konrverteilung von 45 bis 106 µm hergestellt und auf dessen Oberfläche 40 Gew.-% Silumin aufgeklebt. Das fertige Pulver wurde mit einer Flammspritzpistole - wie in Beispiel 1 - als Dichtungsbelag für den Niederdruckkomprossorteil einer Flugzeugturbine aufgetragen. Neben einer ausgezeichneten Temperaturbeständigkeit wurden scharfkantige, glatte Dichtungsrillen und eine sehr gute Verträglichkeit mit den Kompressorschaufeln aus Titan beobachtet.

### Beispiel 3

Das Pulver von Beispiel 2 wurde mit einer Plasma Technik M 100-Plasmaspritzanlage mit 60 l/min. Argon als Fördergas und 80 l/min. Helium bei einer Stromstärke von 400 A und 60 V Spannung verspritzt. Die Fördermenge betrug 15 g/min., der Spritzabstand 250 mm. Die Schicht wurde - wie in Beispiel 2 - als Anstreifbelag im Kompressorteil eingesetzt. Trotz der tieferen Substrattemperatur (keine Aufwärmung durch die Flamme) war die Bindung ausgezeichnet und die Ergebnisse von Beispiel 1 bezüglich Anstreifverhalten und vermindertem Schlupf wurden bestätigt.

### Beispiel 4

Bei einem chemischen Prozeß entstand 2n-Salzsäure neben Ethanol. Am Reaktor trat Lochfraß auf. Durch Beschichtung sollte der Reaktor instandgesetzt werden, wobei eine annehmbare Wärmeleitfähigkeit der Wandung zur Abfuhr der Prozeßwärme notwendig war.

PPS hat eine Wärmeleitfähigkeit von 0,288 W/m °C. Nickelhaltige Superlegierungen kamen wegen der katalytischen Wirkung des Nickels nicht in Frage. Der Reaktor wurde mit einem homogenen Spritzpulver PPS mit 60 % AlN durch Plasmaspritzen mit einer Schichtstärke von 400 µm beschichtet. Durch die Zugabe von 60 % AlN zu PPS konnte die Wärmeleitfähigkeit auf 1,61 W/m °C gesteigert werden. Die Korrosionsbeständigkeit der Beschichtung gegenüber 2n- Salzsäure mit Ethanol war ausgezeichnet.

## Patentansprüche

1. Verfahren zum oberflächlichen Überziehen von Gegenständen mit Polyarylensulfiden durch thermisches Spritzen von Schichten aus Polyarylensulfiden, die oberhalb 270° C schmelzen und gegebenenfalls 0,1 - 90 Gew.% Füll- und Verstärkungsstoffe enthalten.

## Claims

1. Process for surface coating articles with polyarylene sulphides by thermal spraying of layers of polyarylene sulphides, which melt at above 270°C and optionally contain 0.1 to 90 wt.% of fillers and reinforcing agents.

## Revendications

1. Procédé pour revêtir la surface d'objets de polyarylène-sulfures par pulvérisation thermique de couches de polyarylène-sulfures qui fondent au-dessus de 270°C et qui contiennent le cas échéant 0,1 à 90 % en poids de charges et de substances de renforcement.
